# EUROPÄISCHE PATENTSCHRIFT

(11) **EP 0 451 657 B1**
(45) Veröffentlichungstag und Bekanntmachung des Hinweises auf die Patenterteilung: **02.11.1995**
(21) Anmeldenummer: 91105124.1
(22) Anmeldetag: 30.03.1991
(51) Int. Cl.: C08G 18/34, C08G 18/68, C09D 11/10

(54) **Mineralöllösungen von oxidativ vernetzenden Urethanharzen**
Mineral oil solutions of urethane resins curable by oxydation
Solutions de résines d'uréthane durcissables par oxydation dans des huiles minérales

(30) Priorität: 07.04.1990 DE 4011376
(43) Veröffentlichungstag der Anmeldung: 16.10.1991
(73) Patentinhaber: BASF Lacke + Farben AG, 48165 Münster-Hiltrup (DE)
(72) Erfinder: Prantl, Bernhard, Dr., W-6520 Worms 1 (DE); Lawrenz, Dirk, Dr., W-7257 Ditzingen 4 (DE); Walz, Rolf, W-7255 Rutesheim (DE)
(74) Vertreter: Isenbruck, Günter, Dr.

(56) Entgegenhaltungen:
- EP-A- 0 017 199
- EP-A- 0 140 323
- EP-A- 0 379 007
- US-A- 3 778 395
- US-A- 4 116 902

## Beschreibung

Die vorliegende Erfindung betrifft Mineralöllösungen von oxidativ vernetzenden im wesentlichen isocyanatfreien Urethanharzen, erhältlich durch Umsetzung von
A) 100 Gew.-Teilen eines Esters aus
   (a₁) einem aliphatischen C₃-C₈-Alkohol mit mindestens drei Hydroxylgruppen, und
   (a₂) einer ungesättigten C₈-C₄₀-Fettsäure, oder deren Glycerin-Ester, und
   (a₃) gewünschtenfalls einer aliphatischen oder aromatischen Polycarbonsäure mit 4 - 20 C-Atomen oder deren Anhydriden, in Mengen von bis zu 60 Gew.-%, bezogen auf die Fettsäure a₂),
   mit
B)
   (b₁) 3 - 120 Gew.-Teilen von C₅-C₁₅-Polyhydroxycarbonsäuren mit mindestens zwei Hydroxylgruppen und
   (b₂) 10 - 100 Gew.-Teilen eines aliphatischen oder cycloaliphatischen Polyisocyanats oder Mischungen davon,
bei 50 - 150°C in Gegenwart von apolaren, gegenüber Isocyanaten inerten Mineralölen eines Siedenbereichs zwischen 100 und 350°C.

Weiterhin betrifft die Erfindung Verfahren zur Herstellung dieser Mineralöllösungen, deren Verwendung als Bindemittel für Druckfarben sowie diese Bindemittel enthaltende Druckfarben.

Es ist allgemein bekannt, durch Luftsauerstoff vernetzende Öle oder Harze bei der Druckfarbenformulierung einzusetzen, um die mechanische und chemische Beständigkeit von Drucken zu verbessern.

Leinöl, das wegen seines Gehalts an mehrfach ungesättigten Fettsäuren zu den oxidativ trocknenden Ölen gehört, wird seit langem in Druckfarben verwendet.

Auch Urethanöle auf Basis von Leinöl lassen sich für diesen Zweck verwenden, wobei die Mono- oder Diglyceride ungesättigter Fettsäuren mit Diisocyanaten umgesetzt werden.

Als oxidativ vernetzende Komponenten kann man auch "trocknende" Alkydharze einsetzen. Solche mit ungesättigten Fettsäuren modifizierten Polyesterharze lassen sich beispielsweise aus Leinöl, Glycerin und Phthalsäureanhydrid herstellen.
(Vgl. Printing Ink Manual, S. 184-186, S. 202-203, 4. Auflage, London, 1988.)

Aus der EP-A-0 017 199 sind oxidativ härtende Harze bekannt, die durch Reaktion eines Urethanpräpolymeren aus Diisocyanaten und Dihydroxyalkancarbonsäuren mit einem Vorprodukt aus Polyol und ungesättigten Fettsäuren erhalten werden.

Aus der EP-A-0 379 007 ist ein Verfahren zur Herstellung von wäßrigen, oxidativ trocknenden Alkydharzen und deren Verwendung in oder als wäßrige Lacke Beschichtungsmassen bekannt.

Die bisher bekannten Öle oder Harze lassen jedoch bei Verwendung als "trocknende" Komponenten in Druckfarben auf Mineralölbasis wie sie für den Linientiefdruck geeignet sind, zu wünschen übrig.

Solche Druckfarben müssen nämlich gleichzeitig folgenden Anforderungen genügen:
- Mineralöllöslichkeit
- gute Dispergierbarkeit in Wasser oder wäßrigen Laugen, damit überschüssige Farbe schnell und sicher vom Druckzylinder entfernt werden kann
- gute Alkalibeständigkeit nach dem Aushärten.

Bisher bekannte Systeme erfüllen diese Anforderungen nur zum Teil.

Ein weiteres Problem besteht darin, daß Druckfarben zur Hautbildung neigen, was bei vielen drucktechnischen Anwendungen Schwierigkeiten bereitet, beispielsweise weil die Farbe bei längerem Stillstand der Druckmaschine im Farbwerk antrocknet. Deshalb werden Druckfarben benötigt, die gegenüber herkömmlichen Druckfarben eine deutliche Verlangsamung der Hautbildung aufweisen, auf dem Bedruckstoff jedoch schnell durchtrocknen (sogenannter "Skinnex-Effekt").

Dieser Effekt kann durch Zugabe von Antioxidantien wie flüchtigen Oximen, Phenolderivaten oder Chinonen erreicht werden (vgl. Printing Ink Manual, 4. Auflage, S. 341). Nachteilig an diesen bekannten Verfahren ist jedoch, daß die Verwendung von Phenolderivaten zur Vergilbung führen kann und daß

Chinone die Trocknung auf dem Bedruckstoff negativ beeinflussen. Der Einsatz von Oximen ist deshalb problematisch, weil diese aufgrund ihrer Flüchtigkeit ihren Wirkungsort oft gar nicht mehr erreichen.

Aufgabe der vorliegenden Erfindung war es, Mineralöllösungen von Harzen zur Verfügung zu stellen, die "trocknende" Eigenschaften aufweisen und gleichzeitig die Anforderungen bezüglich Wasserdispergierbarkeit erfüllen.

Demgemäß wurden die eingangs definierten Mineralöllösungen von oxidativ vernetzenden Urethanharzen und die hierdurch definierten Verfahren zu ihrer Herstellung sowie deren Verwendung in Druckfarben und diese Harze enthaltende Druckfarben gefunden.

### Komponente A:

Als Komponente A kommen solche Ester aus (a₁) einem aliphatischen C₃-C₈-Alkohol mit mindestens drei Hydroxylgruppen, (a₂) einer ungesättigten C₈-C₄₀-Fettsäure und (a₃) gewünschtenfalls einer aliphatischen oder aromatischen Polycarbonsäure in Betracht, die soviel freie Hydroxylgruppen enthalten, wie es einer OH-Zahl von 50 - 150 mg KOH/g entspricht.

Als geeignete aliphatische C₃-C₈-Alkohole mit mindestens drei Hydroxylgruppen kommen beispielsweise Glycerin, Trimethylolpropan, Pentaerythrit, Dipentaerythrit, Sorbit oder deren Gemische in Betracht, wobei Pentaerythrit bevorzugt ist.

Geeignete Komponenten (a₂) sind mindestens einfach ungesättigte C₈-C₄₀-Fettsäuren wie beispielsweise Linolsäure, Eläostearinsäure oder vorzugsweise Lindensäure oder Rizinensäure.

Falls höhere Molekulargewichte erwünscht sind können zur Kettenverlängerung aliphatische oder aromatische Polycarbonsäuren mit 4 - 20 C-Atomen oder deren Anhydride eingesetzt werden. Geeignete Verbindungen (a₃) sind beispiels Phthalsäure, Isophthalsäure, Terephthalsäure oder Tetrahydrophthalsäure, Maleinsäure, Fumarsäure, Adipinsäure oder Maleinsäureanhydrid.

Die Menge an (a₃) wird so bemessen, daß sie bis zu 60 Gew.-%, vorzugsweise 10 - 30 Gew.-% der Menge an Komponente (a₂) (= 100 Gew.-%) entspricht.

Statt reiner Fettsäuren (a₂) können auch natürliche Öle, die entsprechende ungesättigte Fettsäuren in Form ihrer Glycerin-Ester enthalten, verwendet werden. Geeignete Öle sind bespielsweise Perillaöl, Sojaöl, Safloröl, Oiticicaöl, oder vorzugsweise Leinöl oder Ricinenöl (dehydratisiertes Ricinusöl), wobei die Menge entsprechend des Gehalts an Fettsäureglyceriden bemessen wird.

Die Menge an aliphatischem Alkohol (a₁) wird dann unter Berücksichtigung des Glycerin-Gehalts des natürlichen Fettsäureesters so gewählt, daß der resultierende Ester A noch soviel freie Hydroxylgruppen enthält, wie es einer OH-Zahl von 50 - 150 mg KOH/g entspricht.

Die Herstellung des Esters A erfolgt nach üblichem Verfahren bei 150 - 270°C. Die Umsetzung kann in Gegenwart saurer Veresterungskatalysatoren wie beispielsweise p-Toluolsulfonsäure durchgeführt werden. Das entstehende Reaktionswasser kann nach üblichen Verfahren über einen Wasserabscheider aus dem Reaktionsgemisch entfernt werden.

Die Esterkomponente A, die eine OH-Zahl von 50 - 150 mg KOH/g aufweist, wird dann gemäß B) modifiziert.

### Umsetzungsprodukt B

Als Komponenten (b₁) kommen C₅-C₁₅-Hydroxyalkancarbonsäuren mit mindestens zwei Hydroxylgruppen in Betracht. Besonders geeignet sind 2,2-Di(hydroxymethyl)carbonsäuren wie 2,2-Dihydroxymethylbuttersäure, 2,2-Di(hydroxymethyl)propionsäure.

Die Menge an (b₁) wird so bemessen, daß sie 3 - 120 Gew.-Teile, bezogen auf 100 Gew.-Teile Ester A, beträgt.

Als Komponenten (b₂) eignen sich aliphatische Di- oder Polyisocyanate mit 4-25 C-Atomen oder Mischungen hiervon, wie vorzugsweise Hexamethylendiisocyanat, 4,4'-Dicyclohexylmethandiisocyanat oder Isophorondiisocyanat.

Die Menge an (b₂) beträgt 10 - 100 Gew.-Teile pro 100 Gew.-Teile (A).

Die Verbindungen (b₁) und (b₂) werden bei 50-150, vorzugsweise 60-90°C mit der Komponente A umgesetzt, wobei man sowohl bei Normaldruck als auch bei bis zu 10 bar arbeiten kann. Die Reaktion wird zur Herabsetzung der Viskosität des Reaktionsgemisches in Gegenwart von solchen apolaren organischen Lösungsmitteln durchgeführt, die sich gegenüber den Isocyanatgruppen inert verhalten. Die Lösungsmittel sind Mineralöle mit einem Siedebereich zwischen 100 und 350°C, die sowohl aromatenhaltig als auch aromatenfrei sein können.

Die Umsetzung erfolgt üblicherweise solange, bis alle unter diesen Bedingungen gegenüber Isocyanaten reaktiven Hydroxylgruppen umgesetzt sind. Für den Fall, daß die Isocyanatkomponente in solchen Mengen verwendet wird, daß, bezogen auf reaktive Hydroxylgruppen, ein Überschuß vorliegt, werden restliche Isocyanatgruppen durch Zugabe eines C₁-C₁₈-Monoalkohols desaktiviert. Als Monoalkohole kommen auch Monoester- oder Monoetheralkohole wie beispielsweise Diethylenglykolmonoethylether in Betracht. Es ist auch möglich, die restlichen Isocyanatgruppen mit Hydroxypivallinsäure abreagieren zu lassen. Üblicherweise wird ein bis zu fünffacher Überschuß an Alkoholkomponente zugesetzt. Die Desaktivierung der Isocyanatgruppen kann bei 20 - 150°C vorgenommen werden.

Die Bestimmung des Isocyanatgehalts kann nach dem Fachmann bekannten Verfahren über die Isocyanatzahl erfolgen und im Einzelfall die Menge an nötigem Monoalkohol durch einfache Versuche ermittelt werden.

Als tertiäre C₃-C₂₄-Aminoalkohole eignen sich beispielsweise Triethanolamin, Butyldiethanolamin, Dimethylneopentanolamine, Dimethylaminobutanol, Dimethylaminohexanol, Dimethylaminodiglycol oder Diethylamino-1,2-propandiol.

Üblicherweise werden alle Umsetzungen diskontinuierlich vorgenommen, es ist aber auch möglich, kontinuierlich, beispielsweise in einer Rührkesselkaskade zu arbeiten.

Die erfindungsgemäßen Mineralöllösungen von oxidativ vernetzenden Urethanharze eignen sich hervorragend als "trocknende" Komponenten für Druckfarben auf Mineralölbasis, gleichzeitig setzen sie die unerwünschte Hautbildung herab, ohne das rasche Durchtrocknen auf dem Bedruckstoff negativ zu beeinflussen.

Die Urethanharze werden üblicherweise in Mengen von 2 - 60 Gew.-%, vorzugsweise 2 - 40 Gew.-%, besonders bevorzugt 10 - 40 Gew.-%, verwendet, wobei die Mengen jeweils auf das Gesamtgewicht der Druckfarbe bezogen sind.

Aufgrund der guten Mineralöllöslichkeit können Offset-, Intaglio- und Buchdruckfarben hergestellt werden.

Solche Druckfarben können zur Beschleunigung der Autoxidation auch Sikkative, beispielsweise Kobalt- oder Mangansalze enthalten.

Als weitere Bindemittel können solche Harze verwendet werden, die den Anforderungen an Mineralöllöslichkeit, Wasserdispergierbarkeit und Alkalibeständigkeit genügen beispielsweise saure Harze auf Basis von Kolophonium, wie sie in der deutschen Patentanmeldung P 38 31 242.5 beschrieben sind. Solche sauren Kolophonium-Harze können durch Umsetzung von maleinisiertem Kolophonium mit Resolen und unter anschließender Modifizierung mit Aminoalkoholen und ungesättigten Fettsäuren erhalten werden.

Als Pigmente verwendet man die üblichen Pigmente wie sie für Druckfarben auf Mineralölbasis geeignet sind.

Geeignete Mineralöle sind beispielsweise aliphatische und/oder aromatische Kohlenwasserstoffe mit einem Siedebereich von 150-300°C.

Außerdem können die Druckfarben noch Füllkörper und übliche Additive enthalten.

Weiterhin können die erfindungsgemäßen Harze auch in Siebdruckfarben sowie in konventionellen Tief- und Flexodruckfarben verwendet werden. Aufgrund der guten Dispergierbarkeit können sie auch in wäßrigen Druckfarben verwendet werden.

### Herstellung der Harze

### Beispiel 1

2520 g Rizinenfettsäure wurden unter Stickstoffatmosphäre mit 657 g Pentaerythrit, 291 g Phthalsäureanhydrid, 473 g Xylol und 3,5 g p-Toluolsulfonsäure gemischt und während 4 Stunden auf 180°C erhitzt, wobei entstehendes Reaktionswasser über einen Wasserabscheider ausgekreist wurde. Die Umsetzung wurde bei 180°C fortgeführt bis zu einer Säurezahl von 8 mg KOH/g und einer OH-Zahl von 95 mg KOH/g. 612 g dieses Reaktionsproduktes wurden wiederum unter Stickstoffatmosphäre mit 635 g aromatenfreiem Mineralöl des Siedebeeichs 240-270°C, mit 100 g Dimethylolpropionsäure und 198 g Dimethylisopropylamin versetzt und bei 100°C gelöst. Zu dieser Lösung wurden bei 80°C 240 g Isophorondiisocyanat zugetropft. Die Reaktionstemperatur von 80°C wurde eingehalten, bis alle Isocyanatgruppen umgesetzt waren. Anschließend wurde die Reaktionsmischung unter Anlegen eines Vakuums von ca. 50 mbar auf 130°C erhitzt, wobei alle leichtflüchtigen Bestandteile außer dem hochsiedenden Mineralöl abdestillierten. Man erhielt eine klare Harzlösung, welche eine Viskosität von 2900 Pa·s bei 23°C, einen Festgehalt von 60 % und eine Säurezahl von 50 mg KOH/g, bezogen auf das Festharz, aufwies.

### Beispiel 2

2400 g Leinölfettsäure wurden unter Stickstoffatmosphäre mit 657 g Glycerin, 474 g Terephthalsäure, 472 Xylol und 4 g p-Toluolsulfonsäure gemischt und während 3 Stunden auf 180°C unter Auskreisen von Reaktionswasser erhitzt. Man hielt diese Temperatur, bis eine Säurezahl von 6 mg KOH/g und eine OH-Zahl von 105 mg KOH/g erreicht wurde und destillierte das Lösungsmittel im Vakuum ab. Sodann wurden 390 g dieses Produktes mit 67 g Dimethylolpropionsäure und 100 g N-Methyl-pyrrolidon gemischt und 173 g Isophorondiisocyanat und 1 g Dibutylzinndilaurat bei 80°C zugetropft. Nach Istündiger Umsetzung bei 80°C erwärmte man auf 120°C, bis alle Isocyanatgruppen umgesetzt waren und gab dann 138 g eines aromatfreien Mineralöls vom Siedebereich 140 - 220°C zu. Man erhielt eine klare Harzlösung mit einer Viskosität von 800 Pa·s bei 23°C, einem Festgehalt von 45 % und einer Säurezahl von 50 mg KOH/g, bezogen auf das Festharz.

Das Harz wies eine ausgezeichnete Löslichkeit in verdünnter wäßriger Lauge auf.

### Beispiel 3

2520 g Isomerginfettsäure wurden mit 652 g Pentaerythrit, 279 g Phthalsäureanhydrid, 3 g Tetrabutylorthotitanat und 470 g Xylol unter einer Stickstoffatmosphäre gemischt und während 4 Stunden auf 180°C unter Auskreisen von Reaktionswasser erhitzt. Die Umsetzung wurde bei 180°C bis zu einer Säurezahl von 8 mg KOH/g und einer OH-Zahl von 95 mg KOH/g fortgeführt und anschließend destillierte man flüchtige Bestandteile im Vakuum ab. 717 g dieses Produktes wurden mit 750 g eines Mineralöls vom Siedebereich 260 - 290°C und mit 238 g Dimethylisopropylamin gemischt und bei 80°C langsam mit 300 g Isophorondiisocyanat versetzt. Nach Istündiger Umsetzung bei 80°C wurde auf 120°C erhitzt und flüchtige Bestandteile im Vakuum abdestilliert. Die so erhaltene klare Harzlösung hatte einen Festgehalt von 50 %, eine Viskosität von 1200 Pa·s bei 23°C und eine Säurezahl von 40 mg KOH/g, bezogen auf das Festharz.

### Beispiel 4

374 g des Umsetzungsproduktes aus Fettsäure, Pentaerythrit und Phthalsäureanhydrid aus Beispiel 1 wurden mit 57 g Dimethylolpropionsäure und 57 g N-Methyl-pyrrolidon versetzt und bei 85°C wurden 174 g HMDI (4,4'-Diisocyanato-dicyclohexylmethan) und 1 g Dibutylzinndilaurat zugetropft. Nach 1stündiger Reaktion bei 85°C wurde die Temperatur auf 120°C erhöhte und diese Temperatur gehalten, bis alle Isocyanatgruppen umgesetzt waren. Nach Zugabe von 348 g eines Mineralöls vom Siedebereich 240 - 270°C wurden leicht flüchtige Bestandteile aus der Harzlösung bei 120°C im Vakuum abdestilliert. Die erhaltene Harzlösung hatte einen Festgehalt von 58 % und ließ sich bei 50 - 80°C gut in eine Druckfarbe einarbeiten. Die Säurezahl, bezogen auf das Festharz, betrug 37 mg KOH/g.

### Beispiel 5

Unter Stickstoffatmosphäre wurden 2520 g Rizinenfettsäure, 879 g Pentaerythrit, 805 g Phthalsäureanhydrid, 4 g p-Toluolsulfonsäure und 450 g Xylol miteinander vermischt und während drei Stunden auf 180°C unter Auskreisen von Reaktionswasser erhitzt. Die Umsetzung wurde bei 180°C fortgeführt, bis eine Säurezahl von 6 mg KOH/g Reaktionsgemisch erreicht wurde; anschließend wurden leicht flüchtige Bestandteile bei 180°C im Vakuum abdestilliert. 657 g des so erhaltenen Produktes wurden mit 99 g Dimethylolpropionsäure und 75 g Dimethylaminodiglycol versetzt und bei 130°C klar gelöst. Nach Zugabe von 94 g eines aromatenfreien Mineralöls vom Siedebereich 160 - 210°C wurden 111 g Isophorondiisocyanat langsam bei 80°C zugegeben. Sobald ein Restisocyanatwert von 0,5 % erreicht war, wurden 99 g Ethylenglykolmonobutylether und weitere 120 g Mineralöl zugegeben. Die so erhaltene klare Harzlösung hatte einen Festgehalt von 75 % und eine Viskosität von 200 Pa·s bei 23°C. Die Säurezahl des Festharzes betrug 46 mg KOH/g.

### Vergleichsversuch A (gemäß EP 17 199, Beispiel XI)

Hierzu wurden 100 g Dimethylolpropionsäure, 240 g Isophorondiisocyant, 0,4 g Dibutylzinndilaurat und 380 g Aceton unter Stickstoffatmosphäre gerührt, auf 60°C erhitzt und diese Temperatur wurde einige Stunden gehalten, um die Reaktion zu vervollständigen. Zu dieser Reaktionsmischung wurden dann bei 38 - 43°C 612 g des Produktes aus Rizinenfettsäure, Pentaerythrit und Phthalsäureanhydrid aus Beispiel 1 während 1 Stunde zugegeben. Anschließend erhitzte man auf 57°C und hielt diese Temperatur weitere 6 Stunden, wobei 635 g eines aromatenfreien Mineralöls mit einem Siedebereich von 240 - 270°C zugegeben wurden. Anschließend wurden bei 130°C und 50 mbar leichtflüchtige Bestandteile abdestilliert.

Es konnte keine klare Harzlösung erhalten werden. Das gebildete Harz war in aromatenfreiem Mineralöl schwer löslich.

### Kolophoniumharz-Bindemittel für die Herstellung von Druckfarben

Die Herstellung erfolgte gemäß der deutschen Patentanmeldung P 38 31 242.5, Beispiel 2:
1336 g Kolophonium wurden unter Stickstoffatmosphäre geschmolzen und bei 100°C mit 270 g Butylphenol, 141 g Paraformaldehyd, 8 g Magnesiumoxid und 150 g Butanol versetzt. Das Reaktionsgemisch wurde 4 h lang bei 110°C unter Rückfluß erhitzt und dann wurde die Temperatur während einer Zeitspanne von 5 h auf 200°C erhöht, wobei die leichtflüchtigen Bestandteile abdestilliert wurden. Anschließend wurden innerhalb von 30 min 235 g Maleinsäureanhydrid zugesetzt und weitere 2 h auf 200°C erhitzt und dann auf 160°C gekühlt. Das Reaktionsgemisch wurde bei 160°C mit 145 g Ethanolamin versetzt, noch eine Stunde bei einer Temperatur von 160°C gehalten, während einer Zeitspanne von 2 Stunden auf 180°C erhitzt und anschließend mit 638 g Rizinenfettsäure versetzt. Danach wurde noch 5 Stunden auf 200°C erhitzt, wobei Wasser abdestilliert wurde. Es wurde ein Kondensationsprodukt mit einem Erweichungspunkt von 60°C erhalten.

### Beispiel 6

### Druckfarbe für den Linientiefdruck

Aus
160 g des Umsetzungsproduktes gemäß Beispiel 1
100 g Pigment Heliogenblau D 7030
250 g Schlämmkreide
100 g Permanentweiß
130 g saures Kolophoniumharz-Bindemittel
40 g Dodecylbenzolsulfonat, Na-Salz
20 g Kobalt-octoat
100 g Mineralöl vom Siedebereich 160 - 290°C
100 g Montanwachs
wurde wie üblich eine Druckpaste hergestellt, mit der im Tiefdruckverfahren naßfestes Papier bedruckt wurde. Die bedruckten Bögen waren nicht klebrig, so daß sich die Verwendung von Zwischenblättern erübrigte. Überschüssige Farbe ließ sich vom Druckzylinder rasch, mühelos und vollständig mit 0,3 bis 1 %ige Lauge abwaschen.

Nach Aushärtung, die etwa 5 - 6 Tage erforderte, erwiesen sich die gestochen klaren Drucke als hervorragend alkalibeständig.

### Beispiel 7 - 10

Ähnliche Resultate wie in Beispiel 6 wurden mit Druckpasten erzielt, welche statt des Umsetzungsproduktes aus Beispiel 1 jeweils ein Umsetzungsprodukt gemäß den Beispielen 2 bis 5 enthielten.

### Vergleichsversuch B

Eine Druckfarbe, die stattdessen ein Umsetzungsprodukt gemäß Vergleichsversuch enthielt, war nur mäßig alkalilöslich und ließ sich nicht verdrucken.

### Vergleichsversuch C

Eine Druckpaste, bei welcher das Umsetzungsprodukt aus Bsp. 1 bis 5 gegen ein handelsübliches, langöliges, trocknendes Rizinen-phthalsäure-Alkydharz ersetzt wurde, war nur langsam und unvollständig in 0,3 bis 1 %iger wäßriger Lauge löslich.

### Offsetdruckfarben mit Skinnex-Effekt

### Beispiele 11 - 13

| Druckfarben gemäß Beispiel | 11 | 12 | 13 |
|---|---|---|---|
| Bindemittel gemäß Beispiel 1 ¹) [g] | 400 | 250 | 200 |
| Alkydharz ¹), ²) [g] | 200 | 150 | 200 |
| Kolophonium-modifiziertes Phenolharz ¹), ³) [g] | - | 230 | 330 |
| Pigment Heliogenblau D 7032 [g] | 180 | 150 | 150 |
| Lackleimöl [g] | 200 | 200 | 100 |
| Siccativ (Manganoctoat 12 gew.-%ig in Mineralöl) [g] | 20 | 20 | 20 |

| | | | |
|---|---|---|---|
| ¹) als 50 gew.-%ige Lösung in hochsiedendem Mineralöl | | | |
| ²) handelsübliches Alkydharz aus Phthalsäureanhydrid, Leinöl und Glycerin | | | |
| 3) Harz wie in der deutschen Patentanmeldung P 38312425 beschrieben | | | |

Aus den oben angegebenen Komponenten wurden nach üblichen Verfahren Offsetdruckfarben hergestellt und deren anwendungstechnische Eigenschaften getestet. Die Ergebnisse zeigt die nachstehende Tabelle.

### Anwendungstechnische Eigenschaften:

| Druckfarben gemäß Beispiel | 11 | 12 | 13 |
|---|---|---|---|
| Hautbildung in der Farbdose nach (Tagen) | 2 | 2 | 1 |
| Antrocknen im Farbwerk der Druckmaschine nach (Tagen) | 2 | 1 | 1 |
| Trocknung der Drucke nach einem Tage | gut | gut | sehr gut |

## Patentansprüche (Patentansprüche für folgende(n) Vertragsstaat(en): AT, BE, CH, DE, DK, FR, GB, IT, LI, NL, SE)

1. Mineralöllösungen von oxidativ vernetzenden im wesentlichen isocyanatfreien Urethanharzen, erhältlich durch Umsetzung von
A) 100 Gew.-Teilen eines Esters aus
(a₁) einem aliphatischen C₃-C₈-Alkohol mit mindestens drei Hydroxylgruppen, und
(a₂) einer ungesättigten C₈-C₄₀-Fettsäure oder deren Glycerin-Ester, und
(a₃) gewünschtenfalls einer aliphatischen oder aromatischen Polycarbonsäure mit 4 - 20 C-Atomen oder deren Anhydriden, in Mengen von bis zu 60 Gew.-%, bezogen auf die Fettsäure a₂),
wobei der Ester soviel freie Hydroxylgruppen enthält, wie es einer OH-Zahl von 50 - 150 mg KOH/g entspricht,
mit
B)
(b₁) 3 - 120 Gew.-Teilen von C₅-C₁₅-Polyhydroxycarbonsäuren mit mindestens zwei Hydroxylgruppen und
(b₂) 10 - 100 Gew.-Teilen eines aliphatischen oder cycloaliphatischen Polyisocyanats oder Mischungen davon,
bei 50 - 150°C in Gegenwart von apolaren, gegenüber Isocyanaten inerten Mineralölen eines Siedebereiches zwischen 100 und 350°C.

2. Verfahren zur Herstellung von Mineralöllösungen von oxidativ vernetzenden Urethanharzen gemäß Anspruch 1, dadurch gekennzeichnet, daß man es gemaß den in Anspruch 1 geschilderten Maßnahmen vornimmt.

3. Verwendung der Mineralöllösungen von oxidativ vernetzenden Urethanharzen gemäß Anspruch 1 zur Herstellung von Druckfarben.

4. Verwendung der Mineralöllösungen gemäß Anspruch 1 zur Herstellung von Linientiefdruckpasten.

5. Verwendung der Mineralöllösungen gemäß Anspruch 1 zur Herstellung von Druckfarben mit verzögerter Hautbildung.

6. Mittels Luftsauerstoff aushärtende Druckfarben auf Mineralöl-basis enthaltend 2 - 60 Gew.-% der Umsetzungsprodukte gemäß Anspruch 1.

7. Mittels Luftsauerstoff aushärtende Druckfarben auf Mineralölbasis enthaltend 2 - 40 Gew.-%, bezogen auf das Gesamtgewicht der Druckfarbe, der Umsetzungsprodukte gemäß Anspruch 1.

## Patentansprüche (Patentansprüche für folgende(n) Vertragsstaat(en): ES)

1. Verfahren zur Herstellung von Mineralöllösungen von oxidativ vernetzenden im wesentlichen isocyanatfreien Urethanharzen, dadurch gekennzeichnet, daß man
A) 100 Gew.-Teile eines Esters aus
(a₁) einem aliphatischen C₃-C₈-Alkohol mit mindestens drei Hydroxylgruppen, und
(a₂) einer ungesättigten C₈-C₄₀-Fettsäure oder deren Glycerin-Ester, und
(a₃) gewünschtenfalls einer aliphatischen oder aromatischen Polycarbonsäure mit 4 - 20 C-Atomen oder deren Anhydriden, in Mengen von bis zu 60 Gew.-%, bezogen auf die Fettsäure a₂),
wobei der Ester soviel freie Hydroxylgruppen enthält, wie es einer OH-Zahl von 50 - 150 mg KOH/g entspricht,
mit
B)
(b₁) 3 - 120 Gew.-Teilen von C₅-C₁₅-Polyhydroxycarbonsäuren mit mindestens zwei Hydroxylgruppen und
(b₂) 10 - 100 Gew.-Teilen eines aliphatischen oder cycloaliphatischen Polyisocyanats oder Mischungen davon,
bei 50 - 150°C in Gegenwart von apolaren, gegenüber Isocyanaten inerten Mineralölen eines Siedebereichs zwischen 100 und 350°C umsetzt.

2. Verfahren zur Herstellung von mittels Sauerstoff aushärtenden Druckfarben, dadurch gekennzeichnet, daß man 2 - 60 Gew.-%, bezogen auf das Gesamtgewicht der Druckfarbe, eines oxidativ vernetzenden im wesentlichen isocyanatfreien Urethanharzes gemäß Anspruch 1 oder 2, welches erhältlich ist durch Umsetzung von
A) 100 Gew.-Teilen eines Esters aus
(a₁) einem aliphatischen C₃-C₈-Alkohol mit mindestens drei Hydroxylgruppen, und
(a₂) einer ungesättigten C₈-C₄₀-Fettsäure und
(a₃) gewünschtenfalls einer aliphatischen oder aromatischen Polycarbonsäure mit 4 - 20 C-Atomen oder deren Anhydriden, in Mengen von bis zu 60 Gew.-%, bezogen auf die Fettsäure a₂),
wobei der Ester soviel freie Hydroxylgruppen enthält, wie es einer OH-Zahl von 50 - 150 mg KOH/g entspricht,
mit
B)
(b₁) 3 - 120 Gew.-Teilen von C₅-C₁₅-Polyhydroxycarbonsäuren mit mindestens zwei Hydroxylgruppen und
(b₂) 10 - 100 Gew.-Teilen eines aliphatischen oder cycloaliphatischen Polyisocyanats oder Mischungen davon,
bei 50 - 150°C in Gegenwart von apolaren, gegenüber Isocyanaten inerten Mineralölen eines Siedebereichs zwischen 100 und 350°C,
als Bindemittel einsetzt.

3. Verfahren zur Herstellung von mittels Sauerstoff aushärtenden Druckfarben, dadurch gekennzeichnet, daß man 2 - 40 Gew.-%, bezogen auf das Gesamtgewicht der Druckfarbe, eines oxidativ vernetzenden im wesentlichen isocyanatfreien Urethanharzes gemäß Anspruch 1, welches erhältlich ist durch Umsetzung von
A) 100 Gew.-Teilen eines Esters aus
(a₁) einem aliphatischen C₃-C₈-Alkohol mit mindestens drei Hydroxylgruppen, und
(a₂) einer ungesättigten C₈-C₄₀-Fettsäure und
(a₃) gewünschtenfalls einer aliphatischen oder aromatischen Polycarbonsäure mit 4 - 20 C-Atomen oder deren Anhydriden, in Mengen von bis zu 60 Gew.-%, bezogen auf die Fettsäure a₂),
wobei der Ester soviel freie Hydroxylgruppen enthält, wie es einer OH-Zahl von 50 - 150 mg KOH/g entspricht,
mit
B)
(b₁) 3 - 120 Gew.-Teilen von C₅-C₁₅-Polyhydroxycarbonsäuren mit mindestens zwei Hydroxylgruppen und
(b₂) 10 - 100 Gew.-Teilen eines aliphatischen oder cycloaliphatischen Polyisocyanats oder Mischungen davon,
bei 50 - 150°C in Gegenwart von apolaren, gegenüber Isocyanaten inerten Mineralölen eines Siedebereichs zwischen 100 und 350°C,
als Bindemittel einsetzt.

## Claims (Claims for the following Contracting State(s): AT, BE, CH, DE, DK, FR, GB, IT, LI, NL, SE)

1. A mineral oil solution of an oxidatively cross-linking essentially isocyanate-free urethane resin, obtainable by reacting
A) 100 parts by weight of an ester of
(a₁) an aliphatic C₃-C₈-alcohol having three or more hydroxyl groups and
(a₂) an unsaturated C₈-C₄₀-fatty acid or its glycerol ester, and
(a₃) if required, an aliphatic or aromatic polycarboxylic acid of 4 to 20 carbon atoms or an anhydride thereof, in amounts of up to 60% by weight, based on the fatty acid a₂),
the ester containing sufficient free hydroxyl groups to correspond to an OH number of 50-150 mg of KOH/g, with
B)
(b₁) 3-120 parts by weight of C₅-C₁₅-polyhydroxycarboxylic acids having two or more hydroxyl groups and
(b₂) 10-100 parts by weight of an aliphatic or cycloaliphatic polyisocyanate or a mixture thereof,
at 50-150°C in the presence of a nonpolar mineral oil which is inert to isocyanates and boils within a range from 100 to 350°C.

2. A process for the preparation of a mineral oil solution of an oxidatively crosslinking urethane resin as claimed in claim 1, which is carried out according to the measures described in claim 1.

3. Use of a mineral oil solution of an oxidatively crosslinking urethane resin as claimed in claim 1 for the preparation of printing inks.

4. Use of a mineral oil solution as claimed in claim 1 for the preparation of line gravure print pastes.

5. Use of a mineral oil solution as claimed in claim 1 for the preparation of printing inks having retarded skin formation.

6. A printing ink which cures by means of atmospheric oxygen, is based on mineral oil and contains 2-60% by weight of a reaction product as claimed in claim 1.

7. A printing ink which cures by means of atmospheric oxygen, is based on mineral oil and contains 2-40% by weight, based on the total weight of the printing ink, of a reaction product as claimed in claim 1.

## Claims (Claims for the following Contracting State(s): ES)

1. A process for the preparation of a mineral oil solution of an oxidatively crosslinking essentially isocyanate-free urethane resin, which comprises reacting
A) 100 parts by weight of an ester of
(a₁) an aliphatic C₃-C₈-alcohol having three or more hydroxyl groups and
(a₂) an unsaturated C₈-C₄₀-fatty acid or its glycerol ester, and
(a₃) if required, an aliphatic or aromatic polycarboxylic acid of 4 to 20 carbon atoms or an anhydride thereof, in amounts of up to 60% by weight, based on the fatty acid a₂),
the ester containing sufficient free hydroxyl groups to correspond to an OH number of 50-150 mg of KOH/g, with
B)
(b₁) 3-120 parts by weight of C₅-C₁₅-polyhydroxycarboxylic acids having two or more hydroxyl groups and
(b₂) 10-100 parts by weight of an aliphatic or cycloaliphatic polyisocyanate or a mixture thereof,
at 50-150°C in the presence of a nonpolar mineral oil which is inert to isocyanates and boils within the range from 100 to 350°C.

2. A process for the preparation of a printing ink which cures by means of oxygen, which comprises using 2-60% by weight, based on the total weight of the printing ink, of an oxidatively crosslinking essentially isocyanate-free urethane resin as claimed in claim 1, obtainable by reacting
A) 100 parts by weight of an ester of
(a₁) an aliphatic C₃-C₈-alcohol having three or more hydroxyl groups and
(a₂) an unsaturated C₈-C₄₀-fatty acid or its glycerol ester, and
(a₃) if required, an aliphatic or aromatic polycarboxylic acid of 4 to 20 carbon atoms or an anhydride thereof, in amounts of up to 60% by weight, based on the fatty acid a₂),
the ester containing sufficient free hydroxyl groups to correspond to an OH number of 50-150 mg of KOH/g, with
B)
(b₁) 3-120 parts by weight of C₅-C₁₅-polyhydroxycarboxylic acids having two or more hydroxyl groups and
(b₂) 10-100 parts by weight of an aliphatic or cycloaliphatic polyisocyanate or a mixture thereof,
at 50-150°C in the presence of a nonpolar mineral oil which is inert to isocyanates and boils within a range from 100 to 350°C
as binder.

3. A process for the preparation of a printing ink which cures by means of oxygen, which comprises using 2-40% by weight, based on the total weight of the printing ink, of an oxidatively crosslinking essentially isocyanate-free urethane resin as claimed in claim 1, obtainable by reacting
A) 100 parts by weight of an ester of
(a₁) an aliphatic C₃-C₈-alcohol having three or more hydroxyl groups and
(a₂) an unsaturated C₈-C₄₀-fatty acid or its glycerol ester, and
(a₃) if required, an aliphatic or aromatic polycarboxylic acid of 4 to 20 carbon atoms or an anhydride thereof, in amounts of up to 60% by weight, based on the fatty acid a₂),
the ester containing sufficient free hydroxyl groups to correspond to an OH number of 50-150 mg of KOH/g, with
B)
(b₁) 3-120 parts by weight of C₅-C₁₅-polyhydroxycarboxylic acids having two or more hydroxyl groups and
(b₂) 10-100 parts by weight of an aliphatic or cycloaliphatic polyisocyanate or a mixture thereof,
at 50-150°C in the presence of a nonpolar mineral oil which is inert to isocyanates and boils within a range from 100 to 350°C
as binder.

## Revendications (Revendications pour l'(les) Etat(s) contractant(s) suivant(s): AT, BE, CH, DE, DK, FR, GB, IT, LI, NL, SE)

1. Solutions d'huiles minérales de résines uréthane réticulant par voie oxydative, essentiellement exemptes d'isocyanates, pouvant être obtenues en faisant réagir, entre 50 et 150°C, en présence d'huiles minérales apolaires, inertes vis-à-vis des isocyanates, d'une plage d'ébullition comprise entre 100 et 350°C,
A) 100 parties en poids d'un ester obtenu à partir
(a1) d'un alcool aliphatique en C3 à C8 ayant au moins trois groupes hydroxyle, et
(a2) d'un acide gras insaturé en C8 à C40, ou de ses esters glycériques, et,
(a3) si désiré, d'un acide polycarboxylique aliphatique ou aromatique à 4 à 20 atomes C, ou de ses anhydrides, en quantités allant jusqu'à 60 % en poids, rapportés à l'acide gras a2),
l'ester contenant le nombre de groupes hydroxyle libres correspondant à un indice OH de 50 à 150 mg de KOH/g,
avec
B)
(b1) 3 à 120 parties en poids d'acides polyhydroxycarboxyliques en C5 à C15 ayant au moins deux groupes hydroxyle, et
(b2) 10 à 100 parties en poids d'un polyisocyanate aliphatique ou cycloaliphatique ou de ses mélanges.

2. Procédé de préparation de solutions d'huiles minérales de résines uréthane réticulant par voie oxydative, selon la revendication 1 caractérisé par le fait qu'il est mis en oeuvre conformément aux directives indiquées dans la revendication 1.

3. Utilisation des solutions d'huiles minérales de résines uréthane réticulant par voie oxydative, selon la revendication 1, pour la préparation d'encres d'imprimerie.

4. Utilisation des solutions d'huiles minérales selon la revendication 1 pour préparer des couleurs d'impression hélio linéaire.

5. Utilisation des solutions d'huiles minérales selon la revendication 1 pour préparer des encres d'imprimerie dont la tendance à former une peau est retardée.

6. Encres d'imprimerie à base d'huiles minérales, durcissant à l'aide d'oxygène atmosphérique, contenant 2 à 60 % en poids des produits de réaction selon la revendication 1.

7. Encres d'imprimerie à base d'huiles minérales, durcissant à l'aide d'oxygène atmosphérique, contenant 2 à 40 % en poids, rapportés au poids total de l'encre d'imprimerie, des produits de réaction selon la revendication 1.

## Revendications (Revendications pour l'(les) Etat(s) contractant(s) suivant(s): ES)

1. Procédé de préparation de solutions d'huiles minérales de résines uréthane réticulant par voie oxydative, essentiellement exemptes d'isocyanates, caractérisé par le fait que l'on fait réagir, entre 50 et 150°C, en présence d'huiles minérales apolaires, inertes vis-à-vis des isocyanates, d'une plage d'ébullition comprise entre 100 et 350°C,
A) 100 parties en poids d'un ester obtenu à partir
(a1) d'un alcool aliphatique en C3 à C8 ayant au moins trois groupes hydroxyle, et
(a2) d'un acide gras insaturé en C8 à C40, ou de ses esters glycériques, et,
(a3) si désiré, d'un acide polycarboxylique aliphatique ou aromatique à 4 à 20 atomes C, ou de ses anhydrides, en quantités allant jusqu'à 60 % en poids, rapportés à l'acide gras a2),
l'ester contenant le nombre de groupes hydroxyle libres correspondant à un indice OH de 50 à 150 mg de KOH/g,
avec
B)
(b1) 3 à 120 parties en poids d'acides polyhydroxycarboxyliques en C5 à C15 ayant au moins deux groupes hydroxyle, et
(b2) 10 à 100 parties en poids d'un polyisocyanate aliphatique ou cycloaliphatique ou de ses mélanges.

2. Procédé de préparation d'encres d'imprimerie durcissant au moyen d'oxygène, caractérisé par le fait que l'on utilise, comme liant, 2 à 60 % en poids, rapportés au poids total de l'encre d'imprimerie, d'une résine uréthane réticulant par voie oxydative, essentiellement exempte d'isocyanates, selon la revendication 1, pouvant être obtenue en faisant réagir, entre 50 et 150°C, en présence d'huiles minérales apolaires, inertes vis-à-vis des isocyanates, d'une plage d'ébullition comprise entre 100 et 350°C,
A) 100 parties en poids d'un ester obtenu à partir
(a1) d'un alcool aliphatique en C3 à C8 ayant au moins trois groupes hydroxyle, et
(a2) d'un acide gras insaturé en C8 à C40, ou de ses esters glycériques, et,
(a3) si désiré, d'un acide polycarboxylique aliphatique ou aromatique à 4 à 20 atomes C, ou de ses anhydrides, en quantités allant jusqu'à 60 % en poids, rapportés à l'acide gras a2),
l'ester contenant le nombre de groupes hydroxyle libres correspondant à un indice OH de 50 à 150 mg de KOH/g,
avec
B)
(b1) 3 à 120 parties en poids d'acides polyhydroxycarboxyliques en C5 à C15 ayant au moins deux groupes hydroxyle, et
(b2) 10 à 100 parties en poids d'un polyisocyanate aliphatique ou cycloaliphatique ou de ses mélanges.

3. Procédé de préparation d'encres d'imprimerie durcissant au moyen d'oxygène, caractérisé par le fait que l'on utilise, comme liant, 2 à 40 % en poids, rapportés au poids total de l'encre d'imprimerie, d'une résine uréthane réticulant par voie oxydative, essentiellement exempte d'isocyanates, selon la revendication 1, pouvant être obtenue en faisant réagir, entre 50 et 150°C, en présence d'huiles minérales apolaires, inertes vis-à-vis des isocyanates, d'une plage d'ébullition comprise entre 100 et 350°C,
A) 100 parties en poids d'un ester obtenu à partir
(a1) d'un alcool aliphatique en C3 à C8 ayant au moins trois groupes hydroxyle, et
(a2) d'un acide gras insaturé en C8 à C40, ou de ses esters glycériques, et,
(a3) si désiré, d'un acide polycarboxylique aliphatique ou aromatique à 4 à 20 atomes C, ou de ses anhydrides, en quantités allant jusqu'à 60 % en poids, rapportés à l'acide gras a2),
l'ester contenant le nombre de groupes hydroxyle libres correspondant à un indice OH de 50 à 150 mg de KOH/g,
avec
B)
(b1) 3 à 120 parties en poids d'acides polyhydroxycarboxyliques en C5 à C15 ayant au moins deux groupes hydroxyle, et
(b2) 10 à 100 parties en poids d'un polyisocyanate aliphatique ou cycloaliphatique ou de ses mélanges.
